# DEMANDE DE BREVET EUROPEEN

(11) **EP 4 015 284 A1**
(43) Date de publication de la demande: **22.06.2022**
(21) Numéro de dépôt: 21211725.3
(22) Date de dépôt: 01.12.2021
(51) Int. Cl.: B60L 50/61, B60L 58/18, B64C 1/00, B64D 27/24, B64D 27/02

(54) **AÉRONEF À PROPULSION ÉLECTRIQUE OU HYBRIDE COMPRENANT UNE INSTALLATION ÉLECTRIQUE ADAPTÉE**

(30) Priorité: 18.12.2020 FR 2013590
(71) Demandeur: AIRBUS OPERATIONS (SAS), 31060 Toulouse (FR)
(72) Inventeur: ROUSSET, David, 31060 Toulouse (FR); LACOSTE, Jean-Marc, 31060 Toulouse (FR)
(74) Mandataire: Fantin, Laurent

(57) **Abrégé**

L'invention a pour objet un aéronef à propulsion électrique ou hybride qui comporte une installation électrique comportant au moins un premier réseau électrique (32) ainsi qu'au moins un deuxième réseau électrique (34) fonctionnant à une tension supérieure à celle du premier réseau électrique (32).

Ce deuxième réseau électrique (34) comprend au moins un système de distribution d'énergie électrique (44), au moins un moteur électrique (36) réversible pour propulser l'aéronef directement ou indirectement relié au système de distribution d'énergie électrique (44), au moins un système électrique (38) réversible directement ou indirectement relié au système de distribution d'énergie électrique (44), un boîtier de sécurité (52.1) positionné au plus près de chaque moteur électrique (36) et de chaque système électrique (38) réversible.

## Description

La présente demande se rapporte à un aéronef à propulsion électrique ou hybride comprenant une installation électrique adaptée.

Un aéronef à propulsion thermique comprend un réseau électrique comportant différents équipements électriques et fonctionnant avec des tensions conventionnelles, comme des tensions de 115 V ou de 28V par exemple.

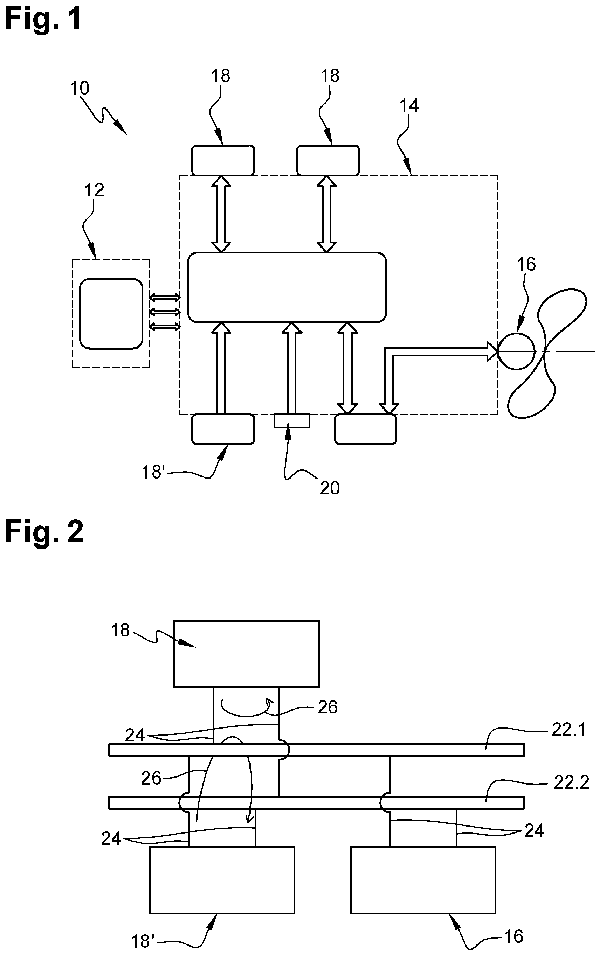

Dans le cas d'un aéronef à propulsion électrique ou hybride, ce dernier comprend des moteurs électriques pour la propulsion de l'aéronef nécessitant une alimentation électrique avec des tensions importantes, non conventionnelles, supérieures à 500 V, voire de l'ordre de 3000 V. Selon un mode de réalisation visible sur la figure 1, une installation électrique 10 d'un aéronef à propulsion électrique comprend un premier réseau électrique 12 à basse tension, sensiblement équivalent à celui implanté dans les aéronefs à propulsion thermique, ainsi qu'un deuxième réseau électrique 14 à haute tension comprenant au moins un moteur électrique 16 pour la propulsion ainsi que des systèmes électriques pour alimenter le moteur électrique 16.

Selon une configuration, les systèmes électriques comprennent des batteries 18 ainsi qu'une turbine 18', comme une unité de puissance auxiliaire également appelée APU (pour Auxiliary Power Unit en anglais). Lorsque l'aéronef est au sol, ce deuxième réseau électrique 14 peut être alimenté par une unité de puissance électrique au sol 20.

Selon un mode de réalisation, le moteur électrique 16 est réversible et produit, lors de certaines phases de vol, de l'énergie électrique utilisée notamment pour recharger les batteries 18.

Une installation électrique d'une automobile à propulsion électrique ou hybride reprend une telle architecture comprenant des batteries rechargeables ainsi que des moteurs électriques réversibles utilisant l'énergie électrique fournie par les batteries ou générant de l'énergie électrique utilisée pour recharger les batteries. Selon cette application, le deuxième réseau électrique 14 fonctionne à une tension inférieure à 1500 V.

Le fonctionnement à des tensions supérieures à 1500 V et la diminution des propriétés diélectriques de l'air à l'altitude de croisière d'un aéronef génèrent des problématiques particulières, non résolues jusqu'ici.

Comme illustré sur la figure 2, le deuxième réseau électrique 14 comprend une première barre d'alimentation 22.1 à un premier potentiel ainsi qu'une deuxième barre d'alimentation 22.2 à un deuxième potentiel auxquelles sont reliées, en parallèle, au moins une batterie 18 et la turbine 18'.

Pour des raisons de sécurité, les câbles électriques 24 reliant certains systèmes électriques 18, 18' ainsi que les première et deuxième barres d'alimentation 22.1, 22.2 doivent suivre des chemins particuliers pour éviter certaines zones critiques de l'aéronef et peuvent ainsi atteindre plusieurs mètres, généralement une dizaine de mètres de long, dans le cas de la batterie 18.

En vol, notamment en phase de croisière, les propriétés isolantes de l'air diminuant, des arcs électriques peuvent se produire et endommager les câbles électriques 24 ainsi quet les première et deuxième barres d'alimentation 22.1, 22.2, finissant par créer des courants de défaut 26.

Si un courant de défaut apparaît au niveau d'une batterie 18 et/ou de l'une des première ou deuxième barres d'alimentation 22.1, 22.2, il est simultanément alimenté par l'ensemble des sources et générateurs réversibles actuellement connectés à la barre d'alimentation (batterie 18 et turbine 18') du fait qu'ils sont reliés, en parallèle, aux première et deuxième barres d'alimentation 22.1, 22.2.

Dans ce cas, lorsque le moteur à propulsion électrique 16 génère de l'électricité utilisée pour recharger la batterie 18, la puissance électrique vue par au moins l'une des première ou deuxième barres d'alimentation 22.1, 22.2, les câbles électriques 24 et/ou par les systèmes électriques 18, 18' est de l'ordre du Mégawatt en cas de court-circuit.

L'installation d'une grande longueur des câbles électriques 24 rend difficile, voire impossible, l'inspection visuelle de l'intégralité des câbles électriques 24 afin de vérifier leur intégrité et détecter d'éventuels défauts d'installation.

Par conséquent, il est nécessaire de protéger les différents éléments du réseau électrique 14 en cas d'apparition d'un court-circuit.

Le document WO 2014/195246 se rapporte à un dispositif d'alimentation électrique pour aéronef à propulsion électrique comportant deux moteurs électriques ainsi que des premier et deuxième packs de batteries, le dispositif d'alimentation électrique permettant de limiter le nombre de pack de batteries et d'assurer une propulsion d'un aéronef à propulsion électrique en cas de défaillance d'un pack de batteries.

Le document EP3276774 concerne une architecture électrique d'aéronef comportant un réseau électrique triphasé primaire alimentant un transformateur-redresseur permettant d'alimenter deux réseaux électriques continus secondaires qui comportent chacun un contacteur, les contacteurs étant liés entre eux deux à deux afin d'interdire leurs fermetures simultanées. Le second réseau secondaire permet d'alimenter la génératrice-démarreur afin de démarrer un moteur thermique.

Le document FR3072653 décrit un réseau électrique d'aéronef et un procédé de fonctionnement du réseau électrique visant à mettre en œuvre une configuration sans raccordement du neutre de générateurs.

La présente invention vise à proposer une nouvelle architecture du réseau électrique à haute tension afin de protéger, efficacement et automatiquement, l'ensemble de ses éléments. A cet effet, l'invention a pour objet un aéronef à propulsion électrique ou hybride comprenant une installation électrique qui comporte au moins un premier réseau électrique fonctionnant à au moins une tension adaptée à un système avionique ainsi qu'au moins un deuxième réseau électrique fonctionnant à au moins une tension supérieure à celle du premier réseau électrique, le deuxième réseau électrique comportant au moins un système de distribution d'énergie électrique, au moins un moteur électrique réversible pour propulser l'aéronef, directement ou indirectement relié au système de distribution d'énergie électrique, ledit moteur électrique étant apte à consommer de l'énergie électrique pendant certaines phases de vol et générer de l'énergie électrique pendant d'autres phases de vol, ainsi qu'au moins un système électrique réversible relié, directement ou indirectement, au système de distribution d'énergie électrique.

Selon l'invention, le deuxième réseau électrique comprend un boîtier de sécurité pour chaque moteur électrique, attenant au moteur électrique et directement relié à ce dernier, ainsi qu'un boîtier de sécurité pour chaque système électrique réversible, attenant au système électrique et directement relié à ce dernier, chacun des boîtiers de sécurité, reliant des tronçons amont et aval du deuxième réseau électrique, étant configuré pour interrompre, en présence d'un courant de défaut, un flux de courant entre les tronçons amont et aval.

Le fait de positionner les boîtiers de sécurité au plus près de chaque moteur électrique et des systèmes électriques permet de protéger efficacement le système de distribution d'énergie électrique, tout en limitant le nombre de boîtiers de sécurité.

Selon une autre caractéristique, le système électrique réversible est un système de stockage d'énergie électrique relié au système de distribution d'énergie électrique par au moins un câble électrique, le boîtier de sécurité prévu pour le système de stockage d'énergie électrique étant intercalé entre le système de stockage d'énergie électrique et le câble électrique reliant le système de stockage d'énergie électrique et le système de distribution d'énergie électrique. Selon une autre caractéristique, le deuxième réseau électrique comprend un système de régulation, un premier câble électrique reliant le système de régulation et le moteur électrique, un deuxième câble électrique reliant le système de régulation et le système de distribution d'énergie électrique, un premier boîtier de sécurité intercalé entre le moteur électrique et le premier câble électrique, un deuxième boîtier de sécurité intercalé entre le système de régulation et le deuxième câble électrique ainsi qu'un troisième boîtier de sécurité intercalé entre le système de régulation et le premier câble électrique, chacun des premier, deuxième et troisième boîtiers de sécurité, reliant des tronçons amont et aval du deuxième réseau électrique étant configuré pour interrompre, en présence d'un courant de défaut, un flux de courant entre les tronçons amont et aval.

Selon une autre caractéristique, le deuxième réseau électrique comprend une turbine, un câble électrique reliant la turbine et le système de distribution d'énergie électrique ainsi qu'un boîtier de sécurité, prévu pour la turbine, intercalé entre la turbine et le câble électrique reliant la turbine et le système de distribution d'énergie électrique, le boîtier de sécurité (prévu pour la turbine, reliant des tronçons amont et aval du deuxième réseau électrique, étant configuré pour interrompre, en présence d'un courant de défaut, un flux de courant entre les tronçons amont et aval.

Selon une autre caractéristique, le deuxième réseau électrique comprend un système de connexion configuré pour relier une unité de puissance électrique au sol, un câble électrique reliant le système de connexion et le système de distribution d'énergie électrique ainsi qu'un boîtier de sécurité, prévu pour le système de connexion, intercalé entre le système de connexion et le câble électrique reliant le système de connexion et le système de distribution d'énergie électrique, le boîtier de sécurité prévu pour le système de connexion, reliant des tronçons amont et aval du deuxième réseau électrique, étant configuré pour interrompre, en présence d'un courant de défaut, un flux de courant entre les tronçons amont et aval.

Selon une autre caractéristique, chaque boîtier de sécurité comprend un actionneur configuré pour occuper un état passant dans lequel il autorise le passage d'un courant entre les tronçons amont et aval ainsi qu'un état bloqué dans lequel il interdit le passage d'un courant entre les tronçons amont et aval, un capteur configuré pour mesurer ou détecter au moins une caractéristique d'un courant de défaut ainsi qu'une commande configurée pour contrôler l'état de l'actionneur en fonction de la caractéristique mesurée ou détectée par le capteur. D'autres caractéristiques et avantages ressortiront de la description de l'invention qui va suivre, description donnée à titre d'exemple uniquement, en regard des dessins annexés parmi lesquels :
- La figure 1 est une représentation schématique d'une installation électrique d'un aéronef à propulsion électrique illustrant un mode de réalisation de l'art antérieur,
- La figure 2 est une représentation schématique d'une partie de l'installation électrique visible sur la figure 1 illustrant un court-circuit,
- La figure 3 est une représentation schématique d'une installation électrique d'un aéronef à propulsion électrique ou hybride illustrant un premier mode de réalisation de l'invention,
- La figure 4 est une représentation schématique d'une installation électrique d'un aéronef à propulsion électrique ou hybride illustrant un deuxième mode de réalisation de l'invention.

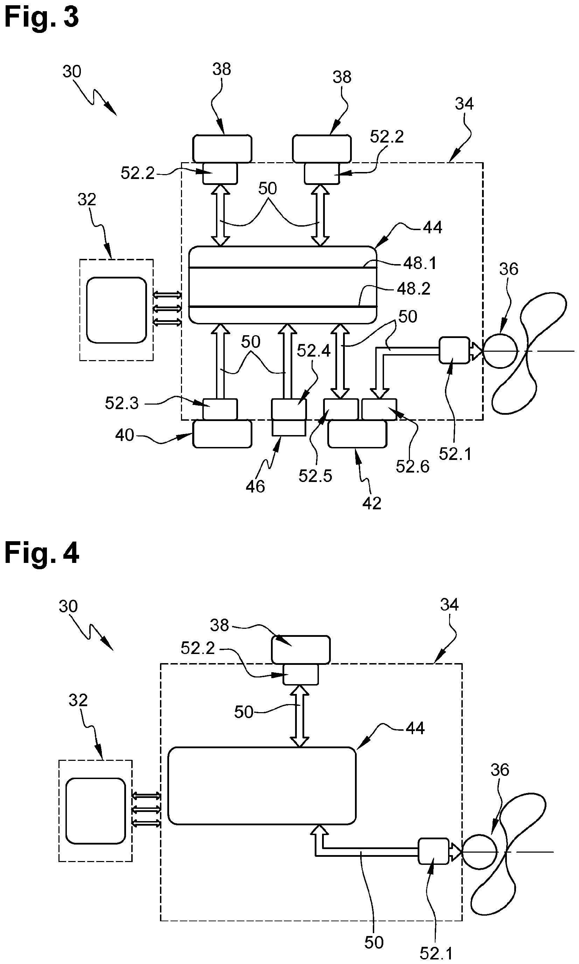

Sur les figures 3 et 4, on a représenté une installation électrique 30 d'un aéronef à propulsion électrique ou hybride comportant au moins un premier réseau électrique 32 fonctionnant à au moins une tension adaptée à un système avionique, dite basse tension, ainsi qu'au moins un deuxième réseau électrique 34 fonctionnant à au moins une tension supérieure à celle du premier réseau électrique, dite haute tension.

Le premier réseau électrique 32 fonctionne à des tensions conventionnelles comme des tensions de l'ordre de 115 V et/ou de 28 V par exemple. Il n'est pas plus décrit car il peut être identique à celui de l'art antérieur.

Selon une application et de manière non limitative, le deuxième réseau électrique 34 est configuré pour fonctionner à une tension supérieure ou égale à 500 V, voire de l'ordre de 3000 V.

Selon un mode de réalisation visible sur la figure 3, le deuxième réseau électrique 34 comprend au moins un moteur électrique 36 pour assurer la propulsion de l'aéronef, au moins un système de stockage d'énergie électrique 38, au moins une turbine 40 configurée pour produire de l'énergie électrique, un système de régulation 42 intercalé entre le moteur électrique 36 et au moins un système de distribution d'énergie électrique 44.

Selon une configuration, le deuxième réseau électrique 34 comprend un système de connexion 46 pour relier une unité de puissance électrique au sol.

Selon une variante simplifiée visible sur la figure 4, le deuxième réseau électrique 34 comprend au moins un moteur électrique 36, au moins un système de stockage d'énergie électrique 38 ainsi qu'au moins un système de distribution d'énergie électrique 44 pour les relier.

Le moteur électrique 36 est réversible. Ainsi, il constitue alternativement une charge et consomme de l'énergie électrique pendant certaines phases de vol ou une source et génère de l'énergie électrique pendant d'autres phases de vol.

De la même manière, le système de stockage d'énergie électrique 38 est rechargeable. Ainsi, lorsque le moteur électrique 36 consomme de l'énergie électrique, il constitue une source et fournit de l'énergie électrique alors que lorsque le moteur électrique 36 fournit de l'énergie électrique il constitue une charge et stocke l'énergie électrique.

Selon un mode de réalisation, chaque système de stockage d'énergie électrique 38 comprend au moins une batterie ainsi qu'au moins un système de gestion de la charge de la (ou des) batterie(s). Comme illustré sur la figure 3, le deuxième réseau électrique 34 peut comprendre plusieurs systèmes de stockage d'énergie électrique 38 comprenant eux-mêmes plusieurs batteries.

Selon une configuration, la turbine 40 est une unité de puissance auxiliaire, également appelée APU (pour Auxiliary Power Unit en anglais), configurée pour fournir de l'énergie électrique.

Le système de régulation 42 est configuré pour réguler l'énergie électrique produite par le moteur électrique 36 et l'injecter dans le système de distribution d'énergie électrique 44.

Le système de distribution d'énergie électrique 44 comprend au moins deux barres d'alimentation 48.1, 48.2, une première barre d'alimentation 48.1 à un premier potentiel ainsi qu'une deuxième barre d'alimentation 48.2 à un deuxième potentiel.

Le système de distribution d'énergie électrique 44 comprend des câbles électriques 50 pour relier chaque système de stockage d'énergie électrique 38, la turbine 40, le système de régulation 42 et le système de connexion électrique 46 aux première et deuxième barres d'alimentation 48.1, 48.2. Le système de distribution d'énergie électrique 44 comprend également des câbles électriques 50 pour relier le moteur électrique 36 et le système de régulation 42.

Quel que soit le mode de réalisation, l'installation électrique 30 d'un aéronef comprend au moins un premier réseau électrique 32 fonctionnant à au moins une tension adaptée à un système avionique, généralement inférieure à 500 V, ainsi qu'au moins un deuxième réseau électrique 34 fonctionnant à au moins une tension supérieure à celle du premier réseau électrique, par exemple à une tension supérieure ou égale à 1500 V, et comportant au moins un système de distribution d'énergie électrique 44, au moins un moteur électrique 36 réversible pour propulser l'aéronef relié directement ou indirectement au système de distribution d'énergie électrique 44 ainsi qu'au moins un système électrique 38, 40, 42, 46 réversible relié directement ou indirectement au système de distribution d'énergie électrique 44. Ainsi, pendant certaines phases de vol, un flux de courant électrique circule du système électrique 38, 40, 42, 46 vers le système de distribution d'énergie électrique 44 puis vers le moteur électrique 36 et, pendant certaines autres phases de vol, un flux de courant électrique circule du moteur électrique 36 vers le système de distribution d'énergie électrique 44 puis vers le système électrique 38, 40, 42, 46.

Le système électrique 38, 40, 42, 46 peut notamment être un système de stockage d'énergie électrique 38, une turbine 40, un système de régulation 42 ou un système de connexion 46. Un système électrique est dit réversible s'il forme alternativement une charge (et consomme de l'énergie électrique) ou une source (et fournit de l'énergie électrique).

Chaque système électrique, qu'il soit réversible ou non, est relié aux première et deuxième barres d'alimentation 48.1, 48.2 par au moins un câble électrique 50. Pour la présente demande de brevet, le terme câble électrique signifie un unique câble électrique ou un faisceau de câbles électriques.

Le deuxième réseau électrique 34 comprend un boîtier de sécurité 52.1 pour chaque moteur électrique 36 ainsi qu'un boîtier de sécurité 52.2 à 52.6 pour chaque système électrique réversible. Selon une configuration, le deuxième réseau électrique 34 comprend un boîtier de sécurité 52.2 à 52.6 pour chaque système électrique, qu'il soit réversible ou non.

Chaque boîtier de sécurité 52.1 à 52.6 reliant des tronçons amont et aval du deuxième réseau électrique 34 est configuré pour interrompre le flux de courant entre les tronçons amont et aval (quel que soit le sens du flux) en présence d'un courant de défaut, comme un courant de court-circuit par exemple.

Chaque boîtier de sécurité 52.1 à 52.6 comprend un actionneur configuré pour occuper un état passant dans lequel il autorise le passage d'un courant entre les tronçons amont et aval ainsi qu'un état bloqué dans lequel il interdit le passage d'un courant entre les tronçons amont et aval, un capteur configuré pour mesurer ou détecter au moins une caractéristique d'un courant de défaut ainsi qu'une commande configurée pour contrôler l'état de l'actionneur en fonction de la caractéristique mesurée ou détectée par le capteur.

Selon un mode de réalisation donné à titre d'exemple, le capteur est configuré pour mesurer un courant et la commande est configurée pour maintenir l'actionneur à l'état passant tant que le courant mesuré par le capteur est inférieur à un seuil donné et le basculer à l'état bloqué dès que le courant mesuré par le capteur dépasse le seuil donné. Bien entendu, l'invention n'est pas limitée à ce mode de réalisation. Ainsi, l'actionneur peut être un contacteur, un fusible ou tout autre élément apte à occuper des états passant ou bloqué et le capteur peut être configuré pour mesurer un courant, une tension, une température ou toute autre caractéristique d'un courant de défaut.

Selon une caractéristique de l'invention, le boîtier de sécurité 52.1 prévu pour le moteur électrique 36 est attenant au moteur électrique 36 et directement relié à ce dernier. Ainsi, le boîtier de sécurité 52.1 est intercalé entre le moteur électrique 36 et le câble électrique 50 reliant le moteur électrique 36 et le système de régulation 42 ou le système de distribution d'énergie électrique 44.

Le boîtier de sécurité 52.2 à 52.6 prévu pour un des systèmes électriques 38, 40, 42, 46 est attenant à ce système électrique 38, 40, 42, 46 et directement relié à ce dernier. Ainsi, le boîtier de sécurité 52.2 prévu pour le système de stockage d'énergie électrique 38 est intercalé entre le système de stockage d'énergie électrique 38 et le câble électrique 50 reliant le système de stockage d'énergie électrique 38 et le système de distribution d'énergie électrique 44. Le boîtier de sécurité 52.3 prévu pour la turbine 40 est intercalé entre la turbine 40 et le câble électrique 50 reliant la turbine 40 et le système de distribution d'énergie électrique 44. Le boîtier de sécurité 52.4 prévu pour le système de connexion 46 est intercalé entre le système de connexion 46 et le câble électrique 50 reliant le système de connexion 46 et le système de distribution d'énergie électrique 44. Enfin, le deuxième réseau électrique 34 comprend un boîtier de sécurité 52.5 intercalé entre le système de régulation 42 et le câble 50 reliant le système de régulation 42 et le système de distribution d'énergie électrique 44 ainsi qu'un boîtier de sécurité 52.6 intercalé entre le système de régulation 42 et le câble 50 reliant le système de régulation 42 et le moteur électrique 36.

Le fait de positionner les boîtiers de sécurité 52.1 à 52.6 au plus près des moteurs électriques 36 et des systèmes électriques 38, 40, 42, 46 permet de protéger efficacement le système de distribution d'énergie électrique 44, y compris les câbles 50, tout en limitant le nombre de boîtiers de sécurité qui ne sont plus nécessaires au niveau des câbles 50 et du système de distribution d'énergie électrique 44.

Cette architecture offre une protection du système de distribution d'énergie électrique 44 quel que soit le sens des flux d'énergie électrique. Elle permet d'obtenir une protection sur la totalité des câbles 50 et du système de distribution d'énergie électrique 44.

## Revendications

1. Aéronef à propulsion électrique ou hybride comprenant une installation électrique qui comporte au moins un premier réseau électrique (32) fonctionnant à au moins une tension adaptée à un système avionique ainsi qu'au moins un deuxième réseau électrique (34) fonctionnant à au moins une tension supérieure à celle du premier réseau électrique (32), le deuxième réseau électrique (34) comportant au moins un système de distribution d'énergie électrique (44), au moins un moteur électrique (36) réversible pour propulser l'aéronef relié directement ou indirectement au système de distribution d'énergie électrique (44), ledit moteur électrique (36) étant apte à consommer de l'énergie électrique pendant certaines phases de vol et générer de l'énergie électrique pendant d'autres phases de vol, ainsi qu'au moins un système électrique (38) réversible directement ou indirectement relié au système de distribution d'énergie électrique (44), **caractérisé en ce que** le deuxième réseau électrique (34) comprend un boîtier de sécurité (52.1) pour chaque moteur électrique (36), attenant au moteur électrique (36) et directement relié à ce dernier, ainsi qu'un boîtier de sécurité (52.2) pour chaque système électrique (38) réversible, attenant au système électrique (38) et directement relié à ce dernier, chacun des boîtiers de sécurité (52.1 à 52.2), reliant des tronçons amont et aval du deuxième réseau électrique (34), étant configuré pour interrompre, en présence d'un courant de défaut, un flux de courant entre les tronçons amont et aval.

2. Aéronef à propulsion électrique ou hybride selon la revendication 1, **caractérisé en ce que** le système électrique (38) réversible est un système de stockage d'énergie électrique (38) relié au système de distribution d'énergie électrique (44) par au moins un câble électrique (50), le boîtier de sécurité (52.2) prévu pour le système de stockage d'énergie électrique (38) étant intercalé entre le système de stockage d'énergie électrique (38) et le câble électrique (50) reliant le système de stockage d'énergie électrique (38) et le système de distribution d'énergie électrique (44).

3. Aéronef à propulsion électrique ou hybride selon l'une des revendications précédentes, **caractérisé en ce que** le deuxième réseau électrique (34) comprend un système de régulation (42), un premier câble électrique (50) reliant le système de régulation (42) et le moteur électrique (36), un deuxième câble électrique (50) reliant le système de régulation (42) et le système de distribution d'énergie électrique (44), un premier boîtier de sécurité (52.1) intercalé entre le moteur électrique (36) et le premier câble électrique (50), un deuxième boîtier de sécurité (52.5) intercalé entre le système de régulation (42) et le deuxième câble électrique (50) ainsi qu'un troisième boîtier de sécurité (52.6) intercalé entre le système de régulation (42) et le premier câble électrique (50), chacun des premier, deuxième et troisième boîtiers de sécurité (52.1, 52.5, 52.6), reliant des tronçons amont et aval du deuxième réseau électrique (34), étant configuré pour interrompre, en présence d'un courant de défaut, un flux de courant entre les tronçons amont et aval.

4. Aéronef à propulsion électrique ou hybride selon l'une des revendications précédentes, **caractérisé en ce que** le deuxième réseau électrique (34) comprend une turbine (40), un câble électrique (50) reliant la turbine (40) et le système de distribution d'énergie électrique (44) ainsi qu'un boîtier de sécurité (52.3), prévu pour la turbine (40), intercalé entre la turbine (40) et le câble électrique (50) reliant la turbine (40) et le système de distribution d'énergie électrique (44), le boîtier de sécurité (52.3) prévu pour la turbine (40), reliant des tronçons amont et aval du deuxième réseau électrique (34), étant configuré pour interrompre, en présence d'un courant de défaut, un flux de courant entre les tronçons amont et aval.

5. Aéronef à propulsion électrique ou hybride selon l'une des revendications précédentes, **caractérisé en ce que** le deuxième réseau électrique (34) comprend un système de connexion (46) configuré pour relier une unité de puissance électrique au sol, un câble électrique (50) reliant le système de connexion (46) et le système de distribution d'énergie électrique (44) ainsi qu'un boîtier de sécurité (52.4), prévu pour le système de connexion (46), intercalé entre le système de connexion (46) et le câble électrique (50) reliant le système de connexion (46) et le système de distribution d'énergie électrique (44), le boîtier de sécurité (52.4) prévu pour le système de connexion (46), reliant des tronçons amont et aval du deuxième réseau électrique (34), étant configuré pour interrompre, en présence d'un courant de défaut, un flux de courant entre les tronçons amont et aval.

6. Aéronef à propulsion électrique ou hybride selon l'une des revendications précédentes, **caractérisé en ce que** chaque boîtier de sécurité (52.1 à 52.6) comprend un actionneur configuré pour occuper un état passant dans lequel il autorise le passage d'un courant entre les tronçons amont et aval ainsi qu'un état bloqué dans lequel il interdit le passage d'un courant entre les tronçons amont et aval, un capteur configuré pour mesurer ou détecter au moins une caractéristique d'un courant de défaut ainsi qu'une commande configurée pour contrôler l'état de l'actionneur en fonction de la caractéristique mesurée ou détectée par le capteur.
